# EUROPÄISCHE PATENTANMELDUNG

(11) **EP 0 939 535 A2**
(43) Veröffentlichungstag der Anmeldung: **01.09.1999**
(21) Anmeldenummer: 99103058.6
(22) Anmeldetag: 16.02.1999
(51) Int. Cl.: H04M 1/57, H04M 1/65

(54) **Anrufbeantworter**

(30) Priorität: 27.02.1998 DE 19808378
(71) Anmelder: SIEMENS AKTIENGESELLSCHAFT, 80333 München (DE)
(72) Erfinder: Federl, Peter, 93080 Pentling (DE); Rieger, Johann, 93077 Bad Abbach (DE)

(57) **Zusammenfassung**

Es ist ein Anrufbeantworter offenbart, der einen Speicher für eine Vielzahl von Ansagetexten aufweist. Der Anrufbeantworter weist darüber hinaus einen Rufnummernspeicher auf, wobei jeder Rufnummer ein bestimmter Ansagetext zugewiesen ist. In diesem Rufnummernspeicher können auch Rufnummerngruppen gebildet werden. Mit einem derartigen Anrufbeantworter ist es möglich, individuell auf die Rufnummer des anrufenden Teilnehmers eine bestimmte Ansage auszugeben.

## Beschreibung

Die Erfindung betrifft einen Anrufbeantworter nach dem Oberbegriff von Patentanspruch 1 sowie Verwendungsmöglichkeiten eines derartigen Anrufbeantworters.

Die bisher bekannten Anrufbeantworter geben bei einem Anruf immer den gleichen Ansagetext aus, solange der Bediener des Anrufbeantworters diesen Ansagetext nicht verändert. Einige neuere Anrufbeantworter bieten dem Bediener des Anrufbeantworters die Möglichkeit, vorab mehrere Ansagetexte aufzuzeichnen, um je nach Situation den Anrufbeantworter derart einzustellen, daß der Anrufbeantworter jeweils einen ganz bestimmten Ansagetext ausgibt. Auch bei diesen Anrufbeantwortern steht jedoch zu einem bestimmten Zeitpunkt nur genau ein Ansagetext zur Verfügung. Es ist daher mit den bisherigen Anrufbeantwortern nicht möglich, einen Ansagetext auszugeben, der sich unmittelbar auf einen bestimmten Anrufer bezieht.

In einem von der Anmelderin erhältlichen Anrufbeantworter mit der Bezeichnung 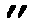 Profiset 70isdn" zum Anschluß an das ISDN-Telefonnetz ist es ebenfalls möglich, unterschiedliche Ansagetexte aufzuzeichnen. Da bei einem Standard-Basisanschluß eines Teilnehmers im ISDN-Telefonnetz mehrere Rufnummern bereitgestellt werden, bietet der Anrufbeantworter 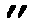 Profiset 70isdn" die Möglichkeit, je nach angewählter Rufnummer des ISDN-Basisanschlusses eine unterschiedliche Ansage an den Anrufer auszugeben. Dies ist besonders dann vorteilhaft, wenn die Rufnummern von unterschiedlichen Personen des Basisanschlusses verwendet werden oder wenn beispielsweise eine Teilnehmernummer für private und eine andere Teilnehmernummer für geschäftliche Zwecke verwendet werden soll. Mit dem Anrufbeantworter 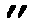 Profiset 70isdn" können derartige Situationen ohne weiteres berücksichtigt werden.

Aus dem US-Patent 5,661,788 ist ein Verfahren und ein System zum selektiven benachrichtigen eines Telefonteilnehmers bei eingehenden Anrufen bekannt geworden. Bei diesem System wird dem Telefonteilnehmer die Rufnummer des anrufenden Teilnehmers mitgeteilt. Er kann sodann entscheiden, ob er diesen Anruf entgegennehmen möchte oder ob der angeschlossene Anrufbeantworter aktiviert werden soll. Dazu ist es insbesondere auch möglich, vorab Anrufe mit bestimmten Rufnummern von anrufenden Teilnehmern auf den Anrufbeantworter umzuleiten, ohne dabei den angerufenen Teilnehmer zu stören.

Der Erfindung liegt das technische Problem zugrunde, einen Anrufbeantworter bereitzustellen, der anruferspezifisch reagieren kann.

Dieses Problem wird gelöst mit einem Anrufbeantworter mit den Merkmalen von Patentanspruch 1.

Bevorzugte Ausführungsbeispiele dieses Anrufbeantworters sind in den Unteransprüchen angegeben. Verwendungen eines derartigen Anrufbeantworters sind in den Ansprüchen 6 und 7 angegeben.

Mit einem Anrufbeantworter nach der Erfindung ist es möglich, einem Anrufer eine rufnummernindividuelle Ansage auszugeben. Dies ist möglich, wenn das Telefonsystem einem angerufenen Teilnehmer die Rufnummer des anrufenden Teilnehmers mitteilt, wie es beispielsweise im ISDN-Telefonsystem der Fall ist. In einem besonders bevorzugten Ausführungsbeispiel können auch Rufnummergruppen gebildet werden, das heißt, die Ansage ist abhängig davon, ob die Rufnummer eines anrufenden Teilnehmers einer bestimmten Gruppe von Rufnummern angehört.

Weitere Vorteile, Merkmale und Anwendungsmöglichkeiten der Erfindung ergeben sich aus der nachfolgenden Beschreibung eines Ausführungsbeispiels in Verbindung mit der Zeichnung.

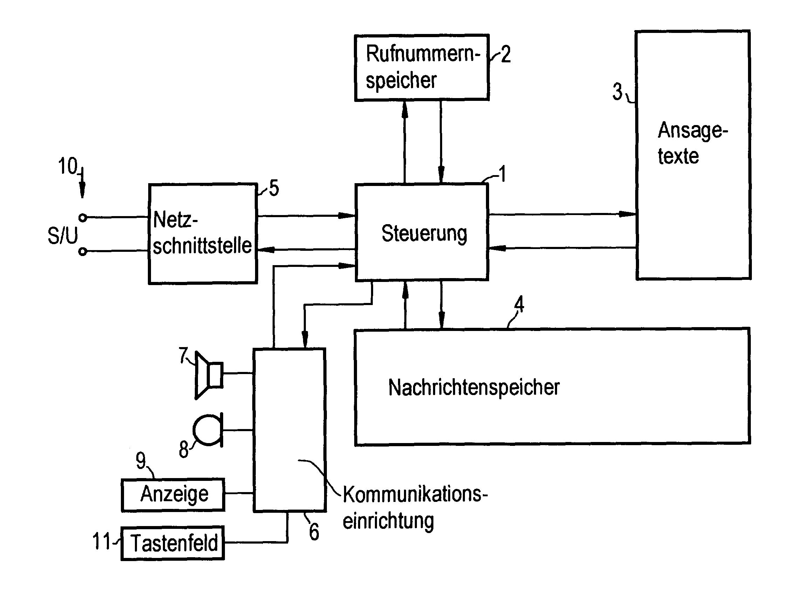

In der Zeichnung zeigt die einzige Figur 1 ein Blockschaltbild eines bevorzugten Ausführungsbeispiels eines Anrufbeantworter der Erfindung.

Der Anrufbeantworter von Figur 1 ist über die Klemmen 10 mit einem Teilnehmeranschluß eines Telefonnetzes verbunden, bei dem einem angerufenen Teilnehmer die Rufnummer des rufenden Teilnehmers übermittelt wird. Im bevorzugten Ausführungsbeispiel nach Figur 1 ist dazu eine S- bzw. U-Schnittstelle eines Teilnehmeranschlusses im ISDN-Telefonnetz dargestellt.

Die Klemmen 10 sind mit einer Netzschnittstelle 5 verbunden, die den Übergang zwischen dem Signalprotokoll auf der S- bzw. U-Schnittstelle und den Signalprotokollen innerhalb des Anrufbeantworters darstellen. Die Netzschnittstelle 5 ist ihrerseits mit der Steuerung 1 des Anrufbeantworters über Leitungen zur bidirektionalen Kommunikation verbunden. Die Steuerung 1 nimmt Signale von der Netzschnittstelle 5 entgegen und gibt umgekehrt Signale an die Netzschnittstelle 5 aus und übernimmt ferner die Kommunikation mit den übrigen Elementen des Anrufbeantworters.

Der Anrufbeantworter weist einen Rufnummernspeicher 2 auf, in dem eine Vielzahl von Rufnummern gespeichert sind. Ein Anwender des Anrufbeantworters kann darin Rufnummern speichern, von denen er Anrufe erwartet und auf die der Anrufbeantworter mit einem bestimmten Ansagetext antworten soll. Der Rufnummernspeicher erlaubt das Speichern sowohl ganz bestimmter Rufnummern als auch von Rufnummergruppen. Eine Rufnummergruppe kann beispielsweise dadurch festgelegt werden, daß einer bestimmten Ziffer einer Rufnummer ein zulässiger Wertebereich zugewiesen wird. Da die ersten Ziffern einer Rufnummer häufig mit dem regionalen Standort des Anrufers zusammenhängen, ist es daher möglich, den Ansagetext darauf abzustimmen. Dies ist ganz besonders vorteilhaft für Anrufe aus dem Ausland, da dadurch die Ansage der Sprache des jeweiligen Auslands angepaßt werden kann. Ist in dem Rufnummernspeicher eine ganz bestimmte Rufnummer angegeben, so ist es möglich, dieser Rufnummer eine besondere Ansage zuzuweisen. Dadurch kann einem bestimmten Anrufer beispielsweise eine Nachricht hinterlegt werden. Entspricht die Rufnummer eines anrufenden Teilnehmers keiner der Rufnummergruppen, so gibt der Anrufbeantworter eine bestimmte Standardansage aus.

Die Steuerung 1 ist ferner über eine bidirektionale Verbindungsleitung mit einem Speicher 3 für Ansagetexte verbunden. In dem Speicher 3 ist eine Vielzahl verschiedener Ansagetexte gespeichert, die bei Bedarf von der Steuerung ausgelesen werden und an den anrufenden Teilnehmer wiedergegeben werden. Jedem Ansagetext ist eine Information darüber zugeordnet, ob der Anrufer nach Wiedergabe der Ansage im Anrufbeantworter eine Nachricht hinterlegen kann oder nicht. Vorzugsweise handelt es sich bei dem Speicher 3 um eine digitale Speicherschaltung, bei der auf einzelne Speicherelemente wahlfrei zugegriffen werden kann und deren Inhalt veränderbar ist.

Die Steuerung 1 ist ferner über eine bidirektionale Verbindungsleitung mit einem Nachrichtenspeicher 4 verbunden. In diesem Speicher 4 werden die Nachrichten aufgezeichnet, die ein Anrufer nach Wiedergabe einer Ansage spricht. In ähnlicher Weise wie der Speicher 3 ist auch der Nachrichtenspeicher 4 eine digitale Speicherschaltung.

Die Steuerung 1 ist schließlich über eine bidirektionale Verbindungsleitung mit einer Kommunikationseinrichtung 6 verbunden. Die Kommunikationseinrichtung 6 ist mit einem Lautsprecher 7, einem Mikrophon 8 und einer alphanumerischen Anzeige 9 verbunden. Über den Lautsprecher 7 können Nachrichten aus dem Nachrichtenspeicher 4 und Ansagetexte aus dem Speicher 3 abgehört werden. Mit dem Mikrophon 8 können Ansagetexte in den Speicher 3 aufgezeichnet werden. In der Anzeige 9 wird vorzugsweise die Rufnummer eines anrufenden Teilnehmers angezeigt. Vorzugsweise wird die Rufnummer des anrufenden Teilnehmers im Nachrichtenspeicher 4 aufgezeichnet, so daß bei der Wiedergabe einer aufgezeichneten Nachricht über den Lautsprecher 7 die zugehörige Rufnummer in der Anzeige 9 dargestellt werden kann. Falls der Anrufbeantworter mit einem Telefon verbunden ist, kann die Rufnummer dem Telefon übermittelt werden, das damit einen Ruf zu dieser Telefonnummer auslöst. Dies kann vom Bediener über ein Tastenfeld 11 eingeleitet werden, das ebenfalls mit der Kommunikationseinrichtung verbunden ist.

Die Steuerung 1 koordiniert den Ablauf der Datensignalströme zwischen den übrigen Elementen des Anrufbeantworters. Bei einem eingehenden Anruf ermittelt die Steuerung 1 zunächst die Rufnummer des anrufenden Teilnehmers aus dem Rufsignal. Die Steuerung 1 prüft dann zunächst, ob im Rufnummernspeicher 2 ein Eintrag mit genau dieser Rufnummer vorliegt. Wenn dies der Fall ist, liest die Steuerung 1 aus dem Rufnummernspeicher 2 die dieser Rufnummer zugewiesene Ansage aus dem Speicher 3 für Ansagetexte aus und gibt sie über das Telefonnetz dem anrufenden Teilnehmer wieder. Falls der Rufnummernspeicher 2 keinen Eintrag mit genau dieser Rufnummer enthält, prüft die Steuerung 1, ob der Rufnummernspeicher 2 eine Rufnummergruppe enthält, zu der die Rufnummer des anrufenden Teilnehmers gehört. Wenn dies der Fall ist, ermittelt die Steuerung 1 die zu dieser Rufnummergruppe gehörende Ansage, ruft sie aus dem Ansagetextspeicher 3 ab und gibt sie dem anrufenden Teilnehmer über das Telefonnetz wieder. Wenn dies nicht der Fall ist, gibt die Steuerung 1 eine im Ansagetextspeicher 3 gespeicherte Standardansage wieder. Je nach Konfiguration einer Ansage im Speicher 3 hat dann nach Wiedergabe einer derartigen Ansage der anrufende Teilnehmer die Möglichkeit, eine Nachricht aufzusprechen, die die Steuerung 1 dann zusammen mit der Rufnummer des anrufenden Teilnehmers im Nachrichtenspeicher 4 ablegt.

## Patentansprüche

1. Anrufbeantworter mit einem Anschluß (10) zur Verbindung mit einem Teilnehmeranschluß eines Telefonnetzes, einem ersten Speicher (3) zum Aufzeichnen und Anrufen einer Vielzahl von Ansagetexten, einem zweiten Speicher (4) zum Aufzeichnen und Ausgeben von eingehenden Nachrichten und einer Steuereinrichtung (1) zum Steuern des Betriebszustandes des Anrufbeantworters,
**gekennzeichnet durch**
einen Rufnummernspeicher (2) für eine Vielzahl von Rufnummern oder Rufnummergruppen, wobei jeder der Vielzahl von Rufnummern und jeder der Vielzahl von Rufnummergruppen ein bestimmter Ansagetext aus der Vielzahl von Ansagetexten zugewiesen ist.

2. Anrufbeantworter nach Patentanspruch 1,
**gekennzeichnet durch**
einen Einrichtung zum Bestimmen der Rufnummer eines rufenden Teilnehmers.

3. Anrufbeantworter nach Patentanspruch 2,
**dadurch gekennzeichnet daß,**
die Steuereinrichtung die so bestimmte Rufnummer mit den Einträgen des Rufnummernspeichers vergleicht und bei Übereinstimmung den zugehörigen Ansagetext ermittelt.

4. Anrufbeantworter nach Patentanspruch 3,
**dadurch gekennzeichnet daß,**
die Steuereinrichtung den ermittelten Ansagetext über das Telefonnetz an den rufenden Teilnehmer wiedergibt.

5. Anrufbeantworter nach Patentanspruch 1,
**dadurch gekennzeichnet daß,**
eine Rufnummergruppe dadurch gebildet ist, daß für mindestenes eine Ziffer einer Rufnummer ein bestimmter Wertebereich zugelassen ist.

6. Verwendung eines Anrufbeantworters nach einem der Patentansprüche 1 bis 5 in einem ISDN-Telefonnetz.

7. Verwendung eines Anrufbeantworters nach einem der Patentansprüche 1 bis 5 in einem analogen Telefonnetz, bei dem an einen angerufenen Teilnehmer die Rufnummer des rufenden Teilnehmers übermittelt wird.
